(19) **Europäisches Patentamt**

**European Patent Office**

**Office européen des brevets**

(11) **EP 1 285 789 B1**

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(51) Int Cl.⁷: **B60H 1/00**

(21) Anmeldenummer: **02018470.1**

(22) Anmeldetag: **16.08.2002**

(54) **Verfahren zur Regelung einer Klimaanlage**

Method for controlling an air-conditioning system

Procédé de régulation d'un système de conditionnement d'air

(84) Benannte Vertragsstaaten:
**DE FR GB IT SE**

(30) Priorität: **22.08.2001 DE 10141118**

(43) Veröffentlichungstag der Anmeldung:
**26.02.2003 Patentblatt 2003/09**

(73) Patentinhaber:
• **Behr GmbH & Co. KG**
**70469 Stuttgart (DE)**
• **Behr-Hella Thermocontrol GmbH**
**D-70469 Stuttgart (DE)**

(72) Erfinder:
• **Flik, Markus**
**70839 Gerlingen (DE)**
• **Kampf, Hans**
**71404 Korb (DE)**
• **Knittel, Otto**
**59494 Soest (DE)**

(74) Vertreter: **Riedel, Peter et al**
**Menzelstrasse 40**
**70192 Stuttgart (DE)**

(56) Entgegenhaltungen:
**EP-A- 1 000 784      EP-A- 1 040 945**
**DE-A- 19 801 036     US-A- 5 291 748**
**US-A- 6 021 956      US-B1- 6 202 934**

• **PATENT ABSTRACTS OF JAPAN vol. 1998, no. 14, 31. Dezember 1998 (1998-12-31) & JP 10 230729 A (ZEXEL CORP), 2. September 1998 (1998-09-02)**
• **PATENT ABSTRACTS OF JAPAN vol. 1998, no. 14, 31. Dezember 1998 (1998-12-31) & JP 10 230728 A (ZEXEL CORP), 2. September 1998 (1998-09-02)**
• **PATENT ABSTRACTS OF JAPAN vol. 1996, no. 03, 29. März 1996 (1996-03-29) & JP 07 304320 A (NIPPONDENSO CO LTD), 21. November 1995 (1995-11-21)**

**Beschreibung**

Die Erfindung betrifft ein Verfahren zur Regelung einer Klimaanlage insbesondere in einem Kraftfahrzeug der im Oberbegriff des Anspruchs 1 angegebenen Gattung.

Aus der DE 196 48 038 A1 ist die Regelung der Fahrzeuginnentemperatur aufgrund eines oder mehrerer physiologischer Parameter bekannt, die am Insassen gemessen werden. Der physiologische Parameter kann beispielsweise die Hauttemperatur, die Hautfeuchtigkeit oder die Pulsfrequenz sein.

Aus der DE 41 27 690 A1 und der US 5,145,112 ist die Regelung einer Klimaanlage auf Basis der mit einem Infrarotsensor gemessenen Gesichtshauttemperatur bekannt.

Aus der DE 100 50 562 A1 ist die Regelung der optimalen Innenraumtemperatur auf Basis von Innenlufttemperatur, Sonnenscheinbetrag, Außenlufttemperatur, Temperatur der Luft am Verdampferaustritt der Klimaanlage und einem eingestellten Wärmegefühl bekannt.

Aus der US-B1-6 202 934 ist ein Verfahren zur Regelung einer Klimaanlage in einem Fahrzeug bekannt. Bei diesem Verfahren wird Luft in einem Wärmetauscher gekühlt und mittels eines Gebläses über Luftdüsen in den Fahrgastinnenraum des Fahrzeugs gefördert. Auf der Basis von Parametern wird ein Komfortwert berechnet, der etwa der Oberflächentemperatur der Haut an mindestens einer Stelle eines Insassen entspricht. Dieser Komfortwert dient als Regelgröße. Als ein Parameter wird die Lufttemperatur an der Stelle, für die der Komfortwert berechnet wird, ermittelt.

Der Erfindung liegt die Aufgabe zugrunde, ein Verfahren zur Regelung einer Klimaanlage der gattungsgemäßen Art zu schaffen, durch das der Komfort für die Fahrzeuginsassen gesteigert wird.

Diese Aufgabe wird durch ein Verfahren mit den Merkmalen des Anspruchs 1 gelöst.

Die Lufttemperatur kann an der Stelle, für die der Komfortwert berechnet wird, aus der Lufttemperatur an mindestens einer Luftaustrittsdüse anhand eines Rechenmodells ermittelt werden, wobei die Lufttemperatur an der Luftaustrittsdüse gemessen wird. Zweckmäßig wird als Parameter die Luftgeschwindigkeit an der Stelle, für die der Komfortwert berechnet wird, ermittelt. Es ist vorgesehen, daß die Luftgeschwindigkeit an der Stelle, für die der Komfortwert berechnet wird, aus der Luftgeschwindigkeit an mindestens einer Luftaustrittsdüse und der Sitzposition ermittelt wird und insbesondere ein Korrekturfaktor in die Ermittlung einfließt, der die Abnahme der Luftgeschwindigkeit in Abhängigkeit der Sitzposition angibt. Dies ist insbesondere dann von Vorteil, wenn Luftgeschwindigkeit und Lufttemperatur mit einem gemeinsamen Sensor an einer Luftaustrittsdüse gemessen werden. Alternativ kann auch vorgesehen sein, daß die Luftgeschwindigkeit an der Körperoberfläche aus der Sitzposition und der Gebläseleistung ermittelt wird und insbesondere die Stellung von an mindestens einer Luftaustrittsdüse angeordneten verstellbaren Klappen in die Ermittlung der Luftgeschwindigkeit an der Körperoberfläche einfließt.

Die Temperatur der Oberfläche der Haut ist der ausschlaggebende Wert für das Wärmegefühl einer Person. Da sich die Temperatur der Oberfläche der Haut insbesondere für mehrere Stellen der Haut eines Insassen in einem Fahrzeug nur schwierig messen läßt, wird der Komfortwert, der der Temperatur der Oberfläche der Haut entspricht, berechnet. Die Parameter, aus denen der Komfortwert berechnet wird, werden dabei so gewählt, daß sie einfach und ausreichend genau ermittelt werden können. Es ist vorgesehen, daß mindestens ein Parameter für die Berechnung des Komfortwerts gemessen wird. Dieser Parameter wird insbesondere am Fahrzeug gemessen und nicht am Körper eines Insassen. Für Parameter, die nicht oder nicht mit vertretbarem Aufwand gemessen werden können, ist es zweckmäßig, daß mindestens ein Parameter für die Berechnung des Komfortwerts abgeschätzt wird. Es kann darüber hinaus vorgesehen sein, daß mindestens ein Parameter für die Berechnung des Komfortwerts anhand eines Rechenmodells aus einem oder mehreren gemessenen und/oder geschätzten Parametern ermittelt wird. Zweckmäßig wird der Komfortwert für mehrere Stellen, insbesondere für sechs Stellen, der Haut mindestens eines Insassen, insbesondere aller Insassen, berechnet. Die Ermittlung mehrerer Komfortwerte erlaubt eine unterschiedliche Klimatisierung mehrerer Bereiche im Fahrzeug. Damit kann einer ungleichmäßigen Wärmeverteilung im Fahrzeug, beispielsweise durch starke Sonneneinstrahlung auf einer Fahrzeugseite, entgegengewirkt werden.

Zweckmäßig wird als Parameter die Strahlungsbelastung durch die Sonne an der Stelle der Haut eines Insassen, für die der Komfortwert berechnet wird, ermittelt. Es ist vorgesehen, daß die Strahlungsbelastung durch die Sonne aus der gemessenen Intensität der Sonnenstrahlung, dem gemessenen Sonnenstand und einem geometrischen Modell des Fahrzeugs ermittelt wird. Zweckmäßig wird die Temperatur der Umschließungsflächen ermittelt, wobei diese als Parameter für die Berechnung des Komfortwerts dient. Die Umschließungsflächen sind die Innenflächen des Fahrgastraumes, also Scheiben, Armaturenbrett, Türen, Himmel, Boden usw.. Es ist vorgesehen, daß die Temperatur der Umschließungsflächen mittels eines Rechenmodells für den Wärmehaushalt der Fahrgastzelle ermittelt wird, da ein solches Rechenmodell in vielen gängigen Simulationsmodellen angewendet wird und daher einfach verfügbar ist.

In Ausgestaltung der Erfindung ist vorgesehen, daß Gewicht, Aktivität und Isolationswirkung der Kleidung des Insassen, für den ein Komfortwert ermittelt wird, abgeschätzt werden und in die Berechnung des Komfortwerts einfließen. Diese Parameter sind bisher nicht zu ermitteln und können ausreichend genau abgeschätzt werden.

Zur Regelung des Komfortwerts wird zweckmäßig die Wärmetauschertemperatur verändert und insbesondere in Abhängigkeit von der Feuchtigkeit im Fahrgastinnenraum eingestellt. Mit Wärmetauschertemperatur ist die Temperatur an dem Wärmetauscher, an dem die Luft gekühlt wird, bezeichnet. Vorteilhaft umfaßt die Klimaanlage einen Heizkörper, der insbesondere als wasserseitig oder luftseitig geregelter Wärmetauscher ausgeführt ist, wobei zur Regelung des Komfortwerts die Heizkörpertemperatur, insbesondere in Abhängigkeit der Temperatur und/oder der Feuchte des Luftstroms, der stromab des zur Kühlung der Luft dienenden Wärmetauschers strömt, eingestellt wird. Weiterhin ist vorgesehen, daß zur Regelung des Komfortwerts der Anteil von Umluft zur Außenluft verändert wird und der Anteil von Umluft zur Außenluft insbesondere in Abhängigkeit der Feuchtigkeit im Fahrzeuginnenraum eingestellt wird.

Für die Feuchtigkeit ist vorgesehen, daß sie in Abhängigkeit der Temperatur der Scheiben, insbesondere der Windschutzscheiben, geregelt wird. Bei niedriger Wärmetauschertemperatur wird die Luft stark entfeuchtet und die daraus resultierende trockene Luft im Fahrgastinnenraum kann zum Austrocknen der Schleimhäute und der Augen der Insassen und damit zu erheblichen Beeinträchtigungen des Komforts führen. Durch eine Erhöhung der Wärmetauschertemperatur wird die gekühlte Luft weniger stark entfeuchtet. Reicht ein Anheben der Wärmetauschertemperatur nicht aus, um die Feuchtigkeit im Fahrgastinnenraum auf einen angenehmen Wert, der etwa bei 40% relativer Feuchte liegen kann, anzuheben, ist vorgesehen, daß der gekühlten Luft Umluft aus dem Fahrgastinnenraum zugemischt wird, die aufgrund der Abgabe von Feuchtigkeit der Insassen eine hohe Feuchtigkeit aufweist. Gleichzeitig wird durch die Regelung der Feuchtigkeit in Abhängigkeit der Scheibentemperatur sichtbehindernder Scheibenbeschlag vermieden. Über die Temperatur des zur Luftkühlung dienenden Wärmetauschers und des Heizkörpers sowie des Anteils von Umluft an der dem Fahrgastinnenraum zuströmenden Luft können Temperatur und Feuchte so in einem weiten Bereich eingestellt werden.

Zweckmäßig wird zur Regelung des Komfortwerts die Gebläseleistung verändert. Es ist vorgesehen, daß die Luftverteilung auf die Luftdüsen, die insbesondere mindestens teilweise in vertikal zueinander angeordneten Ebenen angeordnet sind, zur Regelung des Komfortwerts verändert wird. Durch die Veränderung der Luftverteilung auf die Luftdüsen kann im Fahrgastinnenraum an Stellen, an denen der Komfortwert über dem Sollwert liegt, mehr kühle Luft geleitet werden, so daß die Temperatur dort lokal absinkt, ohne daß der Komfortwert an Stellen, an denen er am oder unter dem Sollwert liegt, weiter absinkt.

Um das System gut auf das individuelle Wärmeempfinden eines Insassen anzupassen, ist vorgesehen, daß Konstanten, die in die Berechnung des Komfortwerts einfließen, aufgrund von manuellen Nachregelungen der Insassen angepaßt werden. Hierbei ist vorgesehen, insbesondere in einer bestimmten Klimasituation wiederkehrende manuelle Nachregelungen eines Insassen, beispielsweise das Verstellen einer Luftdüse, durch Anpassen einer oder mehrerer Konstanten vorwegzunehmen und damit die Nachregelung des Insassen überflüssig zu machen.

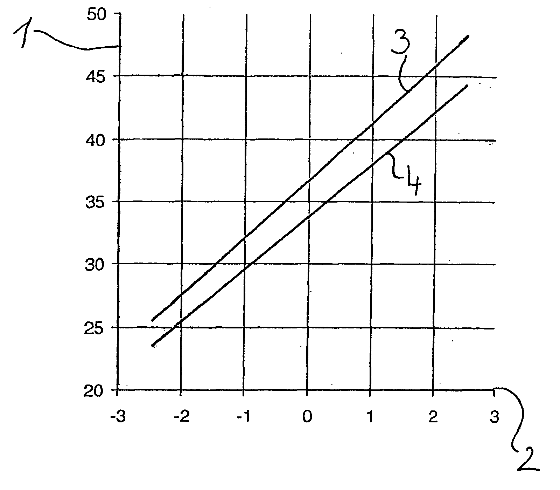

Im folgenden wird ein Ausführungsbeispiel der Erfindung anhand der Zeichnung erläutert. Die einzige Figur der Zeichnung zeigt ein Diagramm, das den Zusammenhang zwischen Komfortwert und Wärmeempfinden darstellt.

Zur Regelung einer Klimaanlage in einem Fahrzeug wird ein Komfortwert herangezogen, der der Oberflächentemperatur der Haut eines Insassen entspricht. Die Zeichnung zeigt ein Diagramm, in dem der Komfortwert auf der Ordinate 1 und das Wärmeempfinden einer Person auf der Abszisse 2 aufgetragen ist. Mit diesem Zusammenhang kann das Wärmeempfinden einer Person mittels des berechneten Komfortwerts ermittelt und die Klimaanlage entsprechend geregelt werden. Ein Wert von Null auf der Abszisse 2 entspricht dem Wärmeempfinden "angenehm", ein positiver Wert dem Wärmeempfinden "zu warm" und ein negativer Wert dem Wärmempfinden "zu kalt". Die Gerade 3 beschreibt den Zusammenhang zwischen Komfortwert und Wärmegefühl an den Füßen einer Person und die Gerade 4 den Zusammenhang an deren Stirn. Aus dem Diagramm ist ersichtlich, daß ein Komfortwert, der an der Stirn einer Person ein angenehmes Wärmeempfinden hervorruft, an den Füßen der Person bereits das Wärmeempfinden "zu kalt" hervorrufen kann. Entsprechende Kurven können mit Testpersonen für alle interessierenden Körperteile ermittelt werden.

Da in einem Fahrzeug unterschiedliche Körperteile unterschiedlich stark erwärmt werden können, beispielsweise durch lokale Sonneneinstrahlung oder durch am Körper des Insassen vorbeiströmende Luft aus den Luftaustrittsdüsen der Klimaanlage, und für unterschiedliche Körperteile beim gleichen Komfortwert ein unterschiedliches Wärmeempfinden resultiert, wird für sechs Stellen des Körpers eines Insassen der Komfortwert berechnet und die Klimaanlage so geregelt, daß an jeder Stelle der Komfortwert möglichst gut dem Sollwert der Temperatur für diese Stelle entspricht. Der Sollwert der Temperatur für diese Stelle kann beispielsweise von einem von dem Insassen an einer Bedieneinheit der Klimaanlage eingestellten Sollwert für das Wärmeempfinden abgeleitet werden.

Der Komfortwert entspricht der Oberflächentemperatur der Haut, die sich in bestimmten Umgebungsbedingungen aufgrund von Strahlungsbelastung, Umgebungstemperatur und Luftgeschwindigkeit einstellt. Hat sich diese Temperatur eingestellt, so ist die Summe aller Wärmeübergänge an dieser Stelle der Haut gleich null und der Komfortwert kann aus der Gleichung $Q_{(Körper)} = Q_{(Konvektion)} + Q_{(Strahlung)}$ ermittelt werden. Q gibt dabei jeweils den entsprechenden Wärmeübergang an. $Q_{(Körper)}$ kann ca. 85 W/m$^2$ für den Fahrer und ca. 70 W/m$^2$ für andere Insassen sein.

$Q_{(Konvektion)}$ bezeichnet den Wärmeübergang aufgrund von Konvektion an der Hautoberfläche und kann aus der Gleichung

$$Q_{(Konvektion)} = \alpha * _{(Komfortwert - T_{(Luft)})}$$

berechnet werden. $\alpha$ ist abhängig von der Luftgeschwindigkeit an der Körperoberfläche und kann aus bekannten Gesetzen für den konvektiven Wärmeübergang ermittelt werden. $\alpha$ beträgt näherungsweise etwa 1,6 W/(m²K). T (Luft) ist die Luftgeschwindigkeit an der Körperoberfläche. Diese wird aus der Luftgeschwindigkeit an den Luftaustrittsdüsen, der Sitzposition des Insassen, für dessen Haut der Komfortwert berechnet wird, und einem Korrekturfaktor ermittelt. Der Korrekturfaktor beschreibt die Abnahme der Luftgeschwindigkeit in Abhängigkeit der Sitzposition und kann beispielsweise empirisch ermittelt und für die Berechnung hinterlegt sein. Die Luftgeschwindigkeit an den Luftaustrittsdüsen wird mit Sensoren an den Luftaustrittsdüsen erfaßt. Die Luftgeschwindigkeit an der Körperoberfläche kann jedoch auch aus einem in der Steuerung der Klimaanlage abgelegten Kennfeld in Abhängigkeit der Gebläseleistung, der Klappenstellung an den Luftaustrittsdüsen und der Sitzposition ermittelt werden.

Q $_{(Strahlung)}$ bezeichnet den Wärmeübergang aufgrund von Strahlung und kann anhand der Formel

$$Q_{(Strahlung)} = Q_{(direkt)} + Q_{(indirekt)}$$

berechnet werden.

Q $_{(direkt)}$ ist dabei die Strahlung durch die Sonne auf die direkt der Sonne ausgesetzten Stellen des Körpers eines Insassen. Die Strahlungsbelastung durch die Sonne kann aus der Intensität der Sonnenstrahlung, die beispielsweise mittels eines Solarsensors gemessen wird, der Richtung, aus der die Sonne scheint, und einem geometrischen Modell des Fahrzeugs für jede Stelle am Körper eines Insassen ermittelt werden.

Q $_{(indirekt)}$ ist die Strahlungsbelastung durch heiße oder kalte Umschließungsflächen. Die Umschließungsflächen sind die Innenflächen des Fahrgastinnenraums und werden durch Scheiben, Armaturenbrett, Türen, Himmel, Boden etc. gebildet. Q $_{(indirekt)}$ kann aus der Formel

$$Q_{(indirekt)} = C * _{(T_{(Komfortwert/100)}^4 - (T_{(Umschließungsflächen)/100})^4)}$$

ermittelt werden, wobei C die Strahlungsaustauschkonstante ist, die etwa 4,9 W/(m²K⁴) sein kann und T (umschließungflächen) die Temperatur der Umschließungsflächen, die aus einem Rechenmodell für den Wärmehaushalt der Fahrgastzelle ermittelt wird.

Aus dem aus diesen Gleichungen berechneten Komfortwert wird auf Basis des Zusammenhangs zwischen Kommfortwert und Wärmeempfinden die Abweichung des Komfortwerts vom Sollwert der Temperatur an der Hautoberfläche des Insassen ermittelt und die Klimaanlage entsprechend nachgeregelt. Die Stellgrößen, die verändert werden, sind die Lufttemperatur am Wärmetauscher, der dem Abkühlen der Luft dient und beispielsweise als Verdampfer ausgeführt sein kann, die Temperatur des Heizkörpers, die Gebläseleistung und die Luftverteilung auf unterschiedliche Luftdüsen. Die Luftverteilung auf unterschiedliche Luftdüsen stellt sicher, daß nur an den Stellen der Haut eines Insassen, an denen der Komfortwert über dem Sollwert der Temperatur der Haut liegt, gekühlt wird während an den Stellen, an denen der Komfortwert unterhalb des Sollwerts der Temperatur liegt, die Temperatur konstant gehalten oder erhöht wird. Bei Anordnung mehrerer Luftdüsen in vertikal übereinanderliegenden Ebenen kann sichergestellt werden, daß im Kopfraum eine angenehme Temperatur herrscht, ohne daß die Temperatur im Fußraum zu sehr absinkt.

Um eine angenehme Feuchtigkeit im Fahrgastinnenraum zu erzielen, die etwa bei 40% relativer Feuchte liegt, wird die Luft im Wärmetauscher nicht immer auf etwa 3°C abgesenkt, sondern bei Bedarf, beispielsweise nur auf ca. 7°C. Dadurch wird die Luft beim Passieren des Wärmetauschers weniger stark entfeuchtet. Falls, beispielsweise weil die Temperatur im Fahrgastinnenraum wesentlich höher ist als der Sollwert der Temperatur, eine Senkung der Temperatur am Wärmetauscher, der beispielsweise als Verdampfer ausgeführt ist, auf ca. 3°C notwendig ist, kann die Feuchtigkeit durch Zumischen von Umluft zur Außenluft angehoben werden. Bei hoher Feuchtigkeit der Luft steigt das Risiko des Beschlagens der Scheiben. Um das zu verhindern, wird die Temperatur der Scheiben, insbesondere die der Windschutzscheibe, gemessen. Liegt die Temperatur in einem kritischen Bereich, kann beispielsweise die Feuchtigkeit der Luft im Fahrgastinnenraum durch Senken der Wärmetauschertemperatur gesenkt werden, um ein Beschlagen der Scheiben zu verhindern. Muß die Luft stark entfeuchtet, jedoch wenig gekühlt werden, so wird der Luftstrom im Wärmetauscher beispielsweise auf 3°C gekühlt und dabei stark entfeuchtet. Im stromab des Wärmetauschers angeordneten Heizkörper wird der Luftstrom auf die zur Einstellung des Komfortwerts notwendige Temperatur erhitzt. Durch die Kombination der Temperaturen des zur Kühlung des Luftstroms dienenden Wärmetauschers und des Heizkörpers können Temperatur und Feuchtigkeit des gekühlten Luftstroms in weiten Bereichen eingestellt werden.

**Patentansprüche**

1. Verfahren zur Regelung einer Klimaanlage in einem Fahrzeug, bei dem Luft in einem Wärmetauscher gekühlt und mittels eines Gebläses über mindestens eine Luftdüse in den Fahrgastinnenraum des Fahrzeugs gefördert wird, wobei auf Basis von Parametern ein Komfortwert berechnet wird, der etwa der Oberflächentemperatur der Haut an mindestens einer Stelle mindestens eines Insassen entspricht und der als Regelgröße dient, und als Parameter die Lufttemperatur an der Stelle, für die der Komfortwert berechnet wird, ermittelt wird, **dadurch gekennzeichnet, daß** die Lufttemperatur an der Stelle, für die der Komfortwert berechnet wird, aus der Lufttemperatur an mindestens einer Luftaustrittsdüse anhand eines Rechenmodells ermittelt wird, oder da**ß** als Parameter die Luftgeschwindigkeit an der Stelle, für die der Komfortwert berechnet wird, ermittelt wird, wobei die Luftgeschwindigkeit an der Stelle, für die der Komfortwert berechnet wird, aus der Luftgeschwindigkeit an mindestens einer Luftaustrittsdüse und der Sitzposition ermittelt wird und insbesondere ein Korrekturfaktor in die Ermittlung einfließt, der die Abnahme der Luftgeschwindigkeit in Abhängigkeit der Sitzposition angibt, oder die Luftgeschwindigkeit an der Stelle, für die der Komfortwert Derecnnet wird, aus der sitzposition und der Gebläseleistung ermittelt wird und insbesondere die Stellung von an mindestens einer Luftaustrittsdüse angeordneten verstellbaren Klappen in die Ermittlung der Luftgeschwindigkeit an der Stelle, für die der Komfortwert berechnet wird, einfließt.

2. Verfahren nach Anspruch 1,
   **dadurch gekennzeichnet, daß** der Komfortwert für mehrere Stellen, insbesondere für sechs Stellen, der Haut mindestens eines Insassens, insbesondere aller Insassen, berechnet wird.

3. Verfahren nach einem der Ansprüche 1 oder 2,
   **dadurch gekennzeichnet, daß** als weiterer Parameter die Strahlungsbelastung durch die Sonne an der Stelle, für die der Komfortwert berechnet wird, ermittelt wird.

4. Verfahren nach Anspruch 3,
   **dadurch gekennzeichnet, daß** die Strahlungsbelastung durch die Sonne aus der gemessenen Intensität der Sonnenstrahlung, dem gemessenen Sonnenstand und einem geometrischen Modell des Fahrzeugs ermittelt wird.

5. Verfahren nach einem der Ansprüche 1 bis 4,
   **dadurch gekennzeichnet, daß** die Temperatur der Umschließungsflächen ermittelt wird und diese als Parameter für die Berechnung des Komfortwertes dient.

6. Verfahren nach Anspruch 5,
   **dadurch gekennzeichnet, daß** die Temperatur der Umschließungsflächen mittels eines Rechenmodells für den Wärmehaushalt der Fahrgastzelle ermittelt wird.

7. Verfahren nach einem der Ansprüche 1 bis 6,
   **dadurch gekennzeichnet, daß** Gewicht, Aktivität und Isolationswirkung der Kleidung des Insassen, für den ein Komfortwert ermittelt wird, abgeschätzt werden und in die Berechnung des Komfortwerts einfließen.

8. Verfahren nach einem der Ansprüche 1 bis 7,
   **dadurch gekennzeichnet, daß** zur Regelung des Komfortwerts die Wärmetauschertemperatur verändert und insbesondere in Abhängigkeit von der Feuchtigkeit eingestellt wird.

9. Verfahren nach einem der Ansprüche 1 bis 8,
   **dadurch gekennzeichnet, daß** die Klimaanlage einen Heizkörper umfaßt, der insbesondere als wasserseitig oder luftseitig geregelter Wärmetauscher ausgeführt ist, wobei zur Regelung des Komfortwerts die Heizkörpertemperatur, insbesondere in Abhängigkeit der Temperatur und/oder der Feuchte des Luftstroms, der stromab des zur Kühlung der Luft dienenden Wärmetauschers strömt, eingestellt wird.

10. Verfahren nach einem der Ansprüche 1 bis 9,
    **dadurch gekennzeichnet, daß** zur Regelung des Komfortwerts der Anteil von Umluft zu Außenluft verändert wird und der Anteil von Umluft zu Außenluft insbesondere in Abhängigkeit der Feuchtigkeit eingestellt wird.

11. Verfahren nach einem der Ansprüche 1 bis 10,
    **dadurch gekennzeichnet, daß** die Feuchtigkeit in Abhängigkeit der Temperatur der Scheiben, insbesondere der Windschutzscheibe, geregelt wird.

**12.** Verfahren nach einem der Ansprüche 1 bis 11,
**dadurch gekennzeichnet, daß** zur Regelung des Komfortwerts die Gebläseleistung verändert wird.

**13.** Verfahren nach einem der Ansprüche 1 bis 12,
**dadurch gekennzeichnet, daß** die Luftverteilung auf die Luftdüsen, die insbesondere mindestens teilweise in vertikal zueinander angeordneten Ebenen angeordnet sind, zur Regelung des Komfortwerts verändert wird.

**14.** Verfahren nach einem der Ansprüche 1 bis 13,
**dadurch gekennzeichnet, daß** Konstanten die in die Berechnung des Komfortwerts einfließen, aufgrund von manuellen Nachregelungen der Insassen angepaßt werden.

## Claims

**1.** Method of automatically controlling an air-conditioning system in a motor vehicle whereby air is cooled in a heat exchanger and conveyed into the passenger compartment of the motor vehicle via at least one air nozzle by means of a fan, for which purpose a comfort value approximately corresponding to the surface temperature of the skin on at least one point of at least one passenger is calculated on the basis of parameters and used as a control variable, and the air temperature at the point for which the comfort value is calculated is determined as a parameter, **characterised in that** the air temperature at the point for which the comfort value is calculated is determined on the basis of the air temperature at at least one air outlet nozzle on the basis of a mathematical model, or the air velocity at the point for which the comfort value is calculated is determined as a parameter, which air velocity at the point for which the comfort value is calculated is determined on the basis of the air velocity at at least one outlet nozzle and the seat position, and in particular a correction factor specifying the decrease in air velocity as a function of the seat position flows into the equation, or the air velocity at the point for which the comfort value is calculated is determined on the basis of the seat position and the fan power, and in particular the position of displaceable flaps disposed on at least one air outlet nozzle flows into the process of determining the air velocity at the point for which the comfort value is calculated.

**2.** Method as claimed in claim 1,
**characterised in that** the comfort value is calculated for several points, in particular for six points, of the skin of at least one passenger, in particular all passengers.

**3.** Method as claimed in one of claims 1 or 2,
**characterised in that** another parameter is determined in the form of exposure to radiation due to the sun at the point for which the comfort value is calculated.

**4.** Method as claimed in claim 3,
**characterised in that** exposure to radiation due to the sun is determined on the basis of the intensity of solar radiation, the measured position of the sun and a geometric model of the vehicle.

**5.** Method as claimed in one of claims 1 to 4,
**characterised in that** the temperature of the surrounding surfaces is determined and it is used as a parameter for calculating the comfort value.

**6.** Method as claimed in claim 5,
**characterised in that** the temperature of the surrounding surfaces is determined by means of a mathematical model for the heat balance of the passenger compartment.

**7.** Method as claimed in one of claims 1 to 6,
**characterised in that** weight, activity and insulating effect of the clothing of the passenger for whom a comfort value is determined are estimated and flow into the calculation of the comfort value.

**8.** Method as claimed in one of claims 1 to 7,
**characterised in that** the heat exchanger temperature is varied in order to control the comfort value and in particular is adjusted as a function of humidity.

**9.** Method as claimed in one of claims 1 to 8,

**characterised in that** the air-conditioning system has a heating body, which is designed as an automatically controlled water-side or air-side heat exchanger, and the heating body temperature is adjusted in order to control the comfort value, in particular as a function of the temperature and/or humidity of the air flow flowing downstream of the heat exchanger used to cool the air.

10. Method as claimed in one of claims 1 to 9,
**characterised in that** the ratio of ambient air to outside air is varied and the proportion of ambient air to outside air is adjusted in particular as a function of humidity in order to control the comfort value.

11. Method as claimed in one of claims 1 to 10,
**characterised in that** the humidity is automatically controlled as a function of the temperature of the windows, in particular the front windscreen.

12. Method as claimed in one of claims 1 to 11,
**characterised in that** the fan power is varied in order to control the comfort value.

13. Method as claimed in one of claims 1 to 12,
**characterised in that** the air distribution to the air nozzles, at least some of which are disposed in planes disposed vertically with respect to one another in particular, is varied in order to control the comfort value.

14. Method as claimed in one of claims 1 to 13,
**characterised in that** constants which flow into the calculation of the comfort value are adapted on the basis of subsequent manual controls made by the passengers.

**Revendications**

1. Procédé de régulation d'une installation de climatisation dans un véhicule, dans lequel
de l'air est refroidi dans un échangeur thermique et transporté au moyen d'une soufflante par l'intermédiaire d'au moins une buse d'air dans l'habitacle du véhicule,
une valeur de confort est calculée sur la base de paramètres, qui correspond sensiblement à la température superficielle de la peau à au moins un endroit d'au moins un passager et sert de grandeur de régulation, et
comme paramètre est déterminée la température de l'air à l'endroit pour lequel la valeur de confort est calculée,
**caractérisé en ce que**
la température de l'air à l'endroit pour lequel la valeur de confort est calculée est déterminée à partir de la température de l'air au niveau d'au moins une buse de sortie d'air au moyen d'un modèle mathématique, ou
comme paramètre est déterminée la vitesse de l'air à l'endroit pour lequel la valeur de confort est calculée,
la vitesse de l'air est déterminée à l'endroit pour lequel la valeur de confort est calculée à partir de la vitesse de l'air au niveau d'au moins une buse de sortie d'air et de la position assise, et
en particulier un facteur de correction est intégré dans la détermination qui indique la baisse de la vitesse de l'air en fonction de la position assise, ou
la vitesse de l'air est déterminée à l'endroit pour lequel la valeur de confort est calculé à partir de la position assise et de la puissance de la soufflante, et
en particulier la position de clapets réglables disposés sur au moins une buse de sortie d'air est prise en compte pour la détermination de la vitesse de l'air à l'endroit pour lequel la valeur de confort est calculée.

2. Procédé selon la revendication 1,
**caractérisé en ce que** la valeur de confort est calculée pour plusieurs endroits, en particulier six, de la peau d'au moins un passager, en particulier de tous les passagers.

3. Procédé selon l'une quelconque des revendications 1 ou 2,
**caractérisé en ce que** comme autre paramètre on détermine la charge du rayonnement solaire à l'endroit pour lequel la valeur de confort est calculée.

4. Procédé selon la revendication 3,
**caractérisé en ce que** la charge de rayonnement du rayonnement solaire est déterminée à partir de l'intensité du rayonnement solaire mesurée, de la position du soleil mesurée et d'un modèle géométrique du véhicule.

**5.** Procédé selon l'une quelconque des revendications 1 à 4,
**caractérisé en ce que** la température des surfaces d'entourage est déterminée et sert de paramètre pour le calcul de la valeur de confort.

**6.** Procédé selon la revendication 5,
**caractérisé en ce que** la température des surfaces d'entourage est déterminée au moyen d'un modèle mathématique pour la gestion thermique de l'habitacle.

**7.** Procédé selon l'une quelconque des revendications 1 à 6,
**caractérisé en ce que** le poids, l'activité et l'effet isolant des vêtements du passager pour lequel une valeur de confort est déterminée sont estimés et intégrés dans le calcul de la valeur de confort.

**8.** Procédé selon l'une quelconque des revendications 1 à 7,
**caractérisé en ce que** pour la régulation de la valeur de confort la température de l'échangeur thermique est modifiée et réglée en particulier en fonction de l'humidité.

**9.** Procédé selon l'une quelconque des revendications 1 à 8,
**caractérisé en ce que** l'installation de climatisation comprend un radiateur qui est notamment un échangeur thermique régulé par eau ou par air, et pour la régulation de la valeur de confort on règle la température du radiateur en particulier en fonction de la température et/ou de l'humidité du courant d'air qui s'écoule en aval de l'échangeur thermique servant au refroidissement de l'air.

**10.** Procédé selon l'une quelconque des revendications 1 à 9,
**caractérisé en ce que** pour la régulation de la valeur de confort, on modifie la proportion de l'air ambiant par rapport à l'air extérieur et règle cette proportion en particulier en fonction de l'humidité.

**11.** Procédé selon l'une quelconque des revendications 1 à 10,
**caractérisé en ce que** l'humidité est régulée en fonction de la température des vitres, en particulier du pare-brise.

**12.** Procédé selon l'une quelconque des revendications 1 à 11,
**caractérisé en ce que** pour la régulation de la valeur de confort on modifie la puissance de la soufflante.

**13.** Procédé selon l'une quelconque des revendications 1 à 12,
**caractérisé en ce que** la répartition de l'air sur les buses d'air, qui sont en particulier disposées du moins en partie dans des plans verticalement superposés, est modifiée pour la régulation de la valeur de confort.

**14.** Procédé selon l'une quelconque des revendications 1 à 13,
**caractérisé en ce que** les constantes intégrées dans le calcul de la valeur de confort sont adaptées suite à des ajustages manuels effectués par les passagers.